# EUROPÄISCHE PATENTANMELDUNG

(11) **EP 3 339 343 A1**
(43) Veröffentlichungstag der Anmeldung: **27.06.2018**
(21) Anmeldenummer: 16206578.3
(22) Anmeldetag: 23.12.2016
(51) Int. Cl.: C08G 18/48, C08G 18/65, C08G 18/69, C08G 18/76, C08G 18/22, C08G 18/36, C09J 175/04, B29C 70/04

(54) **ZWEIKOMPONENTIGE POLYURETHANZUSAMMENSETZUNG**

(71) Anmelder: SIKA TECHNOLOGY AG, 6340 Baar (CH)
(72) Erfinder: Kelch, Steffen, 8102 Oberengstringen (CH)
(74) Vertreter: Sika Patent Attorneys

(57) **Zusammenfassung**

Die vorliegende Erfindung betrifft eine zweikomponentige Polyurethanzusammensetzung bestehend aus einer Polyolkomponente und einer Polyisocyanatkomponente, wobei die Polyolkomponente mindestens ein Umsetzungsprodukt von Ricinusöl mit Ketonharzen **A1,** mindestens ein aliphatisches Triol **A2,** ein aliphatisches Diol **A3,** und ein Polybutadienpolyol **A4** umfasst. Die erfindungsgemässe Polyurethanzusammensetzung verfügt über eine hohe Festigkeit und eine nur schwach ausgeprägte Abhängigkeit der mechanischen Eigenschaften, insbesondere der Festigkeit, von der Temperatur, insbesondere im Bereich von -60°C bis +60°C. Weiter vermag die Zusammensetzung bei Umgebungsbedingungen ohne Blasenbildung auszuhärten, auch in Anwesenheit von Substraten, welche Schäumungsreaktionen aufgrund von vorhandener Restfeuchtigkeit typischerweise begünstigen, wie beispielsweise Glasfasergewebe.

## Beschreibung

### Technisches Gebiet

Die Erfindung betrifft das Gebiet der zweikomponentigen Polyurethanzusammensetzungen und ihre Verwendung, insbesondere als Klebstoff, Vergussmasse oder als Infusionsharz, insbesondere zur Herstellung von faserverstärkten Kunststoffen.

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen schnell aushärten und deshalb bereits nach kurzer Zeit höhere Kräfte aufnehmen und übertragen können. Für den Einsatz als strukturelle Klebstoffe werden hohe Ansprüche in Bezug auf Festigkeit an solche Klebstoffe gestellt, da derartige Klebstoffe Elemente von Last tragenden Strukturen darstellen. Auch für den Einsatz als Vergussmassen oder Infusionsharze werden hohe Ansprüche in Bezug auf Festigkeit gestellt.

Es besteht insbesondere der Wunsch nach Klebstoffen, Vergussmassen und Infusionsharzen, die hohe Festigkeiten im Sinne struktureller Verklebungen über einen möglichst grossen Temperaturbereich, insbesondere im Bereich von -60°C bis über +60°C aufweisen/gewährleisten, verbunden mit einer wenig ausgeprägten Abhängigkeit der Festigkeit von der Temperatur. Gewünscht sind weiterhin Klebstoffe, respektive Vergussmassen oder Infusionsharze, welche bei Umgebungsbedingungen ohne Schäumungsreaktion aushärten, auch bei Substraten wie Glasfasergeweben, welche Schäumungsreaktionen beispielsweise aufgrund ihrer Affinität zur Adsorption von Luftfeuchtigkeit begünstigen.

### Darstellung der Erfindung

Aufgabe der vorliegenden Erfindung ist es daher, eine zweikomponentige Polyurethanzusammensetzung zur Verfügung zu stellen, welche über eine hohe Festigkeit und eine nur schwach ausgeprägte Abhängigkeit der mechanischen Eigenschaften, insbesondere der Festigkeit, von der Temperatur verfügt, insbesondere im Bereich von -60°C bis +60°C. Weiter soll die Zusammensetzung bei Umgebungsbedingungen ohne Schaumbildung aufgrund einer Reaktion von Isocyanatgruppen mit Feuchtigkeit aushärten, auch bei Substraten, welche Schäumungsreaktionen aufgrund von vorhandener Restfeuchtigkeit typischerweise begünstigen.

Überraschenderweise wird diese Aufgabe mit der erfindungsgemässen zweikomponentigen Polyurethanzusammensetzung gelöst. Die Zusammensetzung verfügt über eine hohe Zugfestigkeit und hohe E-moduli mit einer nur schwach ausgeprägte Abhängigkeit der mechanischen Eigenschaften, insbesondere der Zugfestigkeit und der E-moduli, von der Temperatur.

Zudem ist die Zusammensetzung besonders beständig gegenüber Schäumen durch Luftfeuchtigkeit oder verbleibender Restfeuchtigkeit in der Polyolkomponente und/oder der Substrate, beispielsweise Glasfasergeweben.

Weiter wurde überraschenderweise gefunden, dass die erfindungsgemässen Zusammensetzungen eine erste Glasübergangstemperatur (Tg1) bei tiefen Temperaturen unter -60°C sowie einen zweite dominante Glasübergangstemperatur (Tg2) bei Temperaturen über +60°C, insbesondere über +70°C, aufweisen. Dies hat den Vorteil von gleichbleibenden mechanischen Eigenschaften über einen breiten und anwendungstechnisch interessanten Temperaturbereich.

Überraschend war auch die gefundene Unempfindlichkeit/Toleranz der mechanischen Eigenschaften gegenüber einem hohen Überschuss an NCO-Gruppen gegenüber OH-Gruppen, einer sogenannter Überhärtung.

Zusätzlich wurde gefunden, dass sich die mechanischen Eigenschaften nach einer Härtung bei Raumtemperatur nicht von den mechanischen Eigenschaften unterscheiden, die bei einer Härtung bei erhöhter Temperatur, d.h. einem Temperprozess, (3 h bei 80°C) erzielt werden. Dies, insbesondere zusammen mit der Erkenntnis der Unempfindlichkeit bezüglich Schäumungsreaktionen, macht die Zusammensetzung insbesondere für die Herstellung von Faserverbundwerkstoffen interessant. Dadurch kann einerseits auf eine Vortrocknung und Vorbehandlung der Fasern sowie andererseits auf eine Aushärtung bei erhöhter Temperatur und/oder einen Temperprozess des Faserverbundwerkstoffs verzichtet werden, was verfahrenstechnisch einen grossen Vorteil darstellt.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft zweikomponentige Polyurethanzusammensetzung bestehend aus einer Polyolkomponente **K1** und einer Polyisocyanatkomponente **K2;**
wobei die Polyolkomponente **K1**
mindestens ein Umsetzungsprodukt von Ricinusöl mit Ketonharzen mit einer OH-Zahl von 110 bis 200 mg KOH/g **A1,** und mindestens ein aliphatisches Triol mit einem mittleren Molekulargewicht von 170-500 g/mol und einer OH-Zahl von 400-1100 mg KOH/g, wobei es sich um Polyetherpolyole basierend auf 1,1,1-Trimethylolpropan handelt **A2,** und
mindestens ein aliphatisches Diol mit einem Molekulargewicht von 90-146 g/mol **A3,** und
mindestens ein Polybutadienpolyol mit einer mittleren OH-Funktionalität im Bereich von 2.1 bis 2.9, insbesondere 2.3 bis 2.7, und mit einem mittleren Molekulargewicht im Bereich von 2000 bis 4000 g/mol, insbesondere 2500 bis 3000 g/mol, und einer OH-Zahl von 40 - 100 **A4**
umfasst,
und wobei die Polyisocyanatkomponente **K2**
mindestens ein aromatisches Polyisocyanat **B1** umfasst.

Das Verhältnis der Gew.-% von ((**A1**+**A2**) / (**A3**+**A4**)) beträgt 0.5 - 5. Das Verhältnis aller NCO-Gruppen der aromatischen Polyisocyanate B1 : allen OH-Gruppen der Summe von (**A1**+**A2**+**A3**+**A4**) beträgt 0.95 : 1-1.25 : 1.

Das Verhältnis der Gew.-% von (**A4** / **A3**) beträgt 1 - 15.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer polydispersen Mischung von oligomeren oder polymeren Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Als "Offenzeit" wird in diesem Dokument die Zeit bezeichnet, innerhalb welcher die zu verklebenden Teile gefügt sein müssen, nachdem die Komponenten gemischt wurden.

Der Begriff "Festigkeit" bezeichnet im vorliegenden Dokument die Festigkeit des ausgehärteten Klebstoffs, wobei mit Festigkeit insbesondere die Zugfestigkeit und das Elastizitätsmodul (E-Modul), insbesondere im Dehnungsbereich 0.05 bis 0.25%, gemeint sind.

Als "Raumtemperatur" wird im vorliegenden Dokument eine Temperatur von 23°C bezeichnet.

Die Glasübergangstemperatur (nachgehend abgekürzt auch mit Tg), wird im vorliegenden Dokument nach der Methode bestimmt, wie sie im Beispielteil beschrieben ist.

Die Polyolkomponente **K1** umfasst mindestens ein Umsetzungsprodukt von Ricinusöl mit Ketonharzen mit einer OH-Zahl von 110 bis 200 mg KOH/g **A1.**

Bevorzugt ist eine OH-Zahl von 155 bis 190 mg, insbesondere 140 bis 170 mg, insbesondere bevorzugt 150 - 160 mg KOH/g. Weiterhin weist es vorzugsweise ein OH-Equivalentgewicht von 300 bis 400 g/eq auf.

Besonders bevorzugt sind Umsetzungsprodukte von Ricinusöl mit Ketonharzen auf Basis von Cyclohexanon, insbesondere solche, wie sie beispielsweise von Nuplex Resins GmbH unter der Bezeichung Setathane® 1150 und von Cognis unter der Bezeichung Sovermol® 805 vertrieben werden.

Unter dem Begriff "Ricinusöl" (auch Rizinusöl oder Kastoröl genannt) wird im vorliegenden Dokument insbesondere Ricinusöl verstanden wie es beschreiben ist in CD Römpp Chemie Lexikon, Version 1.0, Thieme Verlag.

Unter dem Begriff "Ketonharz" wird im vorliegenden Dokument insbesondere Ketonharz verstanden wie es beschreiben ist in CD Römpp Chemie Lexikon, Version 1.0, Thieme Verlag.

Die Polyolkomponente **K1** umfasst mindestens ein aliphatisches Triol mit einem mittleren Molekulargewicht von 170-500 g/mol und einer OH-Zahl von 400-1100 mg KOH/g, wobei es sich um Polyetherpolyole basierend auf 1,1,1-Trimethylolpropan handelt **A2.**

Vorzugsweise handelt es sich bei dem aliphatischen Triol **A2** um Polyetherpolyole basierend auf 1,1,1-Trimethylolpropan mit einem mittleren Molekulargewicht von 175-400 g/mol, insbesondere von 175-350 g/mol. Weiter ist es vorteilhaft, wenn das aliphatische Triol **A2** eine OH-Zahl von 500-1000 mg KOH/g, bevorzugt 520-980 mg KOH/g aufweist.

Vorzugsweise handelt es sich bei den Polyetherpolyolen basierend auf 1,1,1-Trimethylolpropan um alkoxyliertes 1,1,1-Trimethylolpropan, insbesondere ethoxyliertes oder propoxyliertes 1,1,1-Trimethylolpropan, am meisten bevorzugt um propoxyliertes 1,1,1-Trimethylolpropan.

Geeignete Polyetherpolyole basierend auf 1,1,1-Trimethylolpropan sind beispielsweise auch kommerziell erhältlich unter dem Handelsnamen Desmophen® 4011 T von Covestro AG, Deutschland oder unter dem Handelsnamen Lupranol® 3903 von BASF, Deutschland.

Die Polyolkomponente **K1** umfasst mindestens ein aliphatisches Diol mit einem Molekulargewicht von 90-146 g/mol **A3.**

Vorzugsweise ist das mindestens eine aliphatische Diol A3 ausgewählt aus der Liste bestehend aus 1,4 Butandiol, 2-Ethyl-1,3-hexandiol, 3-Methyl-1,5-pentandiol und 1,5-Pentandiol, vorzugsweise ausgewählt aus der Liste bestehend aus 1,4 Butandiol und 1,5-Pentandiol.

Ist das aliphatische Diol **A3** ausgewählt aus der Liste bestehend aus 1,4 Butandiol und 1,5-Pentandiol so ermöglicht dies Zusammensetzungen, welche besonders hohe Werte für die Zugfestigkeit und gleichzeitig hohe Werte für den Tg (2. Tg) im Bereich über 50°C erreichen.

Handelt es sich bei dem aliphatischen Diol **A3** um 1,4 Butandiol so ist dies insbesondere besonders hohen Werten für die Zugfestigkeit zuträglich.

Handelt es sich bei dem aliphatischen Diol **A3** um 1,5-Pentandiol so ist dies insbesondere besonders tiefen Werten für den Tg (1. Tg) im Bereich unter -50°C zuträglich.

Die Polyolkomponente **K1** umfasst mindestens ein Polybutadienpolyol mit einer mittleren OH-Funktionalität im Bereich von 2.1 bis 2.9, insbesondere 2.3 bis 2.7, und mit einem mittleren Molekulargewicht im Bereich von 2000 bis 4000 g/mol, insbesondere 2500 bis 3000 g/mol, und einer OH-Zahl von 40-100 **A4.**

Solche Polybutadienpolyole sind insbesondere erhältlich durch die Polymerisation von 1,3-Butadien und Allylalkohol in einem geeigneten Verhältnis oder durch die Oxidation von geeigneten Polybutadienen.

Geeignete Polybutadienpolyole sind insbesondere Polybutadienpolyole, welche Strukturelemente der Formel (I) und gegebenenfalls Strukturelemente der Formeln (II) und (III) enthalten.

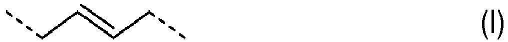

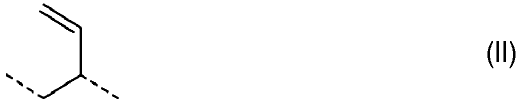

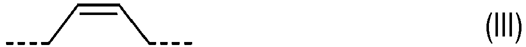

### Bevorzugte Polybutadienpolyole enthalten

40 bis 80%, insbesondere 55 bis 65% des Strukturelements der Formel (I),
0 bis 30%, insbesondere 15 bis 25%, des Strukturelements der Formel (II),
0 bis 30%, insbesondere 15 bis 25%, des Strukturelements der Formel (III).

Besonders geeignete Polybutadienpolyole sind beispielweise erhältlich von Cray Valley unter dem Handelsnamen Poly bd^{®} R-45HTLO oder Poly bd^{®} R-45M oder von Evonik unter dem Handelsnamen Polyvest HT.

Die vorliegende Polyisocyanatkomponente **K2** umfasst mindestens ein aromatisches Polyisocyanat **B1.**

Geeignete aromatische Polyisocyanate **B1** sind insbesondere monomere Di- oder Triisocyanaten, sowie Oligomere, Polymere und Derivate von monomeren Di- oder Triisocyanate, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat. Bevorzugte aromatische monomere Di- oder Triisocyanate sind abgeleitet von MDI und/oder TDI, insbesondere von MDI.

Geeignete Oligomere, Polymere und Derivate der genannten monomeren Di- und Triisocyanate sind insbesondere abgeleitet von MDI und TDI. Davon insbesondere geeignet sind kommerziell erhältliche Typen, TDI-Oligomere wie Desmodur^{®} IL (von Bayer); weiterhin geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen darstellen, bekannt unter Handelsnamen wie Desmodur^{®} CD, Desmodur^{®} PF, Desmodur^{®} PC (alle von Bayer), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle von Bayer), Isonate^{®} M 309, Voranate^{®} M 229 und Voranate^{®} M 580 (alle von Dow) oder Lupranat^{®} M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf, vorzugsweise 2.3 bis 3.0, insbesondere 2.4 bis 2.6.

Bevorzugt sind als aromatische Polyisocyanate **B1** sind Oligomere, Polymere und Derivate abgeleitet von MDI, insbesondere mit einer mittleren NCO-Funktionalität von 2.1 bis 4.0, vorzugsweise 2.3 bis 3.0, insbesondere 2.4 bis 2.6. Weiter ist es vorteilhaft, wenn das aromatische Polyisocyanat **B1** ein mittleres Molekulargewicht von 160 - 2000 g/mol, insbesondere 500 - 1500 g/mol aufweist.

Es ist weiter vorteilhaft, wenn die Summe der NCO-Gruppen, welche nicht von **B1** herrühren, ≤5%, insbesondere ≤2%, insbesondere bevorzugt ≤1%, am meisten bevorzugt ≤0.5%, beträgt, bezogen auf die Summe aller NCO -Gruppen der zweikomponentigen Polyurethanzusammensetzung.

Vorzugsweise beträgt der Anteil des aromatischen Polyisocyanats **B1** ≥90 Gew.-%, insbesondere ≥ 95 Gew.-%, insbesondere bevorzugt ≥99 Gew.-%, bezogen auf das Gesamtgewicht der Polyisocyanatkomponente **K2.**

Das Verhältnis der Gew.-% von ((**A1**+**A2**) / (**A3**+**A4**)) beträgt 0.5 - 5.

Vorzugsweise beträgt das Verhältnis der Gew.-% von (**A1**+**A2** / **A3**+**A4**) 1.6 - 3.2, insbesondere 1.65 - 2.9, vorzugsweise 1.75 - 2.7, insbesondere bevorzugt 1.85 - 2.5. Besonders bevorzugt beträgt das Verhältnis der Gew.-% 1.85 - 2.35, insbesondere 1.85 - 2.2, vorzugsweise 1.85 - 2.05. Dies ermöglicht Zusammensetzungen, welche hohe Werte für die Zugfestigkeit und gleichzeitig hohe Werte für den Tg (2. Tg) im Bereich über 50°C erreichen und tiefe Werte für den Tg (1. Tg) im Bereich unter -50°C erreichen, insbesondere wenn das aliphatische Diol **A3** ausgewählt ist aus der Liste bestehend aus 1,4 Butandiol, 2-Ethyl-1,3 Hexandiol, 3-Methyl-1,5-Pentandiol und 1,5-Pentandiol, ganz besonders wenn es sich um 1,4 Butandiol oder 1,5-Pentandiol handelt.

Das Verhältnis der Gew.-% von (**A4** / **A3**) beträgt 1 - 15. Beträgt das Verhältnis der Gew.-% von (**A4** / **A3**) > 15, so ist das dahingehend von Nachteil, dass dadurch die Zugfestigkeitswerte und E-modulwerte so tief sind, dass die resultierenden Zusammensetzungen nicht als Klebstoffe Vergussmassen oder Infusionsharze geeignet sind. Dies ist beispielsweise in den Vergleichsbeispielen R3 und R4 ersichtlich.

Vorzugsweise beträgt das Verhältnis der Gew.-% von (**A4** / **A3**) 0.8-7.5, insbesondere 0.8 - 4, vorzugsweise 1.2 - 3, insbesondere bevorzugt 1.2-2.2. Besonders bevorzugt beträgt das Verhältnis der Gew.-% 1.2 - 1.8, insbesondere 1.2 - 1.5, bevorzugt 1.35 - 1.5. Dies ermöglicht Zusammensetzungen, welche hohe Werte für die Zugfestigkeit und gleichzeitig hohe Werte für den Tg (2. Tg) im Bereich über 50°C erreichen und tiefe Werte für den Tg (1. Tg) im Bereich unter -50°C erreichen, insbesondere wenn das aliphatische Diol **A3** ausgewählt ist aus der Liste bestehend aus 1,4 Butandiol, 2-Ethyl-1,3 Hexandiol, 3-Methyl-1,5-Pentandiol und 1,5-Pentandiol, ganz besonders wenn es sich um 1,4 Butandiol oder 1,5-Pentandiol handelt.

Handelt es sich bei dem aliphatischen Diol **A3** um 1,4 Butandiol oder 1,5-Pentandiol, insbesondere 1,4 Butandiol, kann es vorteilhaft sein, wenn das Verhältnis der Gew.-% von (**A4** / **A3**) 1.35 - 1.8 beträgt. Dies ist hohen Werten für die Zugfestigkeit zuträglich, insbesondere wenn das Verhältnis der Gew.-% von **((A1+A2)** / (**A3**+**A4**)) 1.95 - 2.2 beträgt.

Das Verhältnis aller NCO-Gruppen der aromatischen Polyisocyanate **B1** zu allen OH-Gruppen der Summe von (**A1**+**A2**+**A3**+**A4**) beträgt = 0.95 : 1 bis 1.25 : 1. Unter dem vorgehend beschriebenen Verhältnis wird das molare Verhältnis erwähnter Gruppen verstanden.

Überraschenderweise wurde gefunden, dass sich die hohen Werte für Zugfestigkeit und E-modul sowie die vorteilhaften Werte für die Tg im Falle von einem Verhältnis von 1.2 : 1 gegenüber den Werten von 1.1 : 1 kaum verändern. Diese Konstanz und Robustheit des Systems ist überraschend und bringt den Vorteil der Möglichkeit, vorgenannte Werte gegebenenfalls leicht anzupassen. Weiter ist das System weniger empfindlich auf Mischfehler bezüglich dem Verhältnis der Polyolkomponente **K1** zur Polyisocyanatkomponente **K2.**

Handelt es sich bei dem aliphatischen Diol **A3** um 1,4 Butandiol oder 1,5-Pentandiol, insbesondere 1,4 Butandiol, kann es vorteilhaft sein, wenn das Verhältnis aller NCO-Gruppen der aromatischen Polyisocyanate **B1** : allen OH-Gruppen der Summe von **(A1+A2+A3+A4)** = 0.95 : 1 - 1.15 : 1 beträgt. Dies ist besonders hohen Werten für die Zugfestigkeit zuträglich.

Bei der zweikomponentigen Polyurethanzusammensetzung beträgt die Summe aller OH-Gruppen von **(A1+A2+A3+A4)** ≥90% der Summe aller OH-Gruppen der zweikomponentigen Polyurethanzusammensetzung.

Vorzugsweise beträgt bei der zweikomponentigen Polyurethanzusammensetzung die Summe aller OH-Gruppen von **(A1+A2+A3+A4)** ≥95%, insbesondere ≥98%, insbesondere bevorzugt ≥99%, am meisten bevorzugt ≥99,5%, der Summe aller OH-Gruppen der zweikomponentigen Polyurethanzusammensetzung. Dies ist hohen Werten für die Zugfestigkeit und das E-modul zuträglich.

Vorzugsweise ist die zweikomponentige Polyurethanzusammensetzung im Wesentlichen frei von OH-Gruppen, welche nicht von **(A1+A2+A3+A4)** herrühren. Unter dem Begriff "im Wesentlichen frei" wird in diesem Fall verstanden, dass die Summe der OH-Gruppen, welche nicht von **(A1+A2+A3+A4)** herrühren, ≤5%, insbesondere ≤2%, insbesondere bevorzugt ≤1%, am meisten bevorzugt ≤0.5%, beträgt, bezogen auf die Summe aller OH-Gruppen der zweikomponentigen Polyurethanzusammensetzung. Dies ist hohen Werten für die Zugfestigkeit und das E-modul zuträglich.

### Vorzugsweise ist die zweikomponentige

Polyurethanzusammensetzung im Wesentlichen frei von OH-Gruppen der folgenden Stoffe:
- 1,2,3-Propantriol und/oder 1,1,1-Trimethylolpropan.
- Polyetherpolyolen, insbesondere Polyoxyalkylenpolyolen, mit einem mittleren Molekulargewicht von 500 bis 6000 g/mol

Weiterhin kann die zweikomponentige Polyurethanzusammensetzung Katalysatoren enthalten, die die Reaktion von Hydroxylgruppen mit Isocyanatgruppen beschleunigen, insbesondere Zinn-, Zink-, Zirkonium- und Wismut-organische Metallkatalysatoren, zum Beispiel Dibutylzinndilaurat, oder tertiäre Amine, Amidine oder Guanidine, zum Beispiel 1,4-Diazabicyclo[2.2.2]octan (DABCO) oder 1,8-Diazabicyclo[5.4.0]undec-7-en (DBU). Zur Erzielung einer Wärmeaktivierung können insbesondere die tertiären Amine, Amidine oder Guanidine mit Phenol oder Carbonsäuren, insbesondere phenolischen oder sonstigen aromatischen Carbonsäuren, reversibel ein Salz oder einen Komplex bilden, welches bei Erhöhung der Temperatur zersetzt wird.

Die zweikomponentige Polyurethanzusammensetzung kann neben den bereits erwähnten weitere Bestandteile, wie sie der Fachmann aus der zweikomponenten-Polyurethanchemie her kennt, enthalten. Diese können in nur einer Komponente oder in beiden vorhanden sein.

Als weitere Bestandteile bevorzugt sind anorganische und organische Füllstoffe, wie insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-AluminiumSilikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metallpulver wie Aluminium, Kupfer, Eisen, Silber oder Stahl, PVC-Pulver oder Hohlkugeln.

Die Zugabe von Füllstoffen ist, insbesondere wenn es sich bei der Polyurethanzusammensetzung um einen Klebstoff handelt, dahingehend von Vorteil, dass dadurch die Festigkeit der ausgehärteten Polyurethanzusammensetzung erhöht wird.

Es kann vorteilhaft sein, wenn die Polyurethanzusammensetzung mindestens einen Füllstoff ausgewählt aus der Gruppe bestehend aus Calciumcarbonat, Kaolin, Baryt, Talk, Quarzmehl, Dolomit, Wollastonit, Kaolin, calciniertes Kaolin und Mica enthält.

Als weitere Bestandteile können weiterhin insbesondere Lösungsmittel, Weichmacher und/oder Extender, Pigmente, Rheologiemodifizierer wie insbesondere amorphe hydrophobe Kieselsäuren, Trocknungsmittel wie insbesondere Zeolithe, Haftvermittler wie insbesondere Trialkoxysilane, Stabilisatoren gegen Oxidation, Wärme, Licht- und UV-Strahlung, flammhemmende Substanzen, sowie oberflächenaktive Substanzen, insbesondere Netzmittel und Entschäumer, vorhanden sein.

Die Komponenten **K1** und **K2** werden vorteilhaft derart formuliert, dass das Volumenverhältnis von Komponente **K1** und **K2** zwischen 1:3 und 3:1, insbesondere zwischen 1:2 und 2:1, beträgt. Besonders bevorzugt beträgt dieses Verhältnis in etwa 1:1.

Eine bevorzugte zweikomponentige Polyurethanzusammensetzung besteht: aus einer Polyolkomponente **K1,** welche:
- 70 bis 95 Gewichts-%, bevorzugt 80 bis 95 Gewichts-%, insbesondere 85 bis 95 Gewichts-%, der Summe **(A1+A2+A3+A4);** und
- 5 bis 30 Gewichts-%, bevorzugt 5 bis 20 Gewichts-%, insbesondere 5 bis 10 Gewichts-%, Füllstoffe, insbesondere Füllstoffe ausgewählt aus der Gruppe bestehend aus Calciumcarbonat, Kaolin, Baryt, Talk, Quarzmehl, Dolomit, Wollastonit, Kaolin, calciniertes Kaolin, und Mica, besonders bevorzugt Calciumcarbonat und Rheologiemodifizierer wie insbesondere hydrophobe amorphe Kieselsäuren; und
- 0 bis 5 Gewichts-%, bevorzugt 1 bis 3 Gewichts-%, Katalysatoren für die Beschleunigung der Reaktion von Hydroxylgruppen mit Isocyanatgruppen sowie Trocknungsmittel (insbesondere Zeolithe);
- bezogen auf das Gesamtgewicht der Polyolkomponente K1,
enthält, insbesondere daraus besteht,
und aus einer Polyisocyanatkomponente **K2,** welche:
- einen Anteil des aromatischen Polyisocyanats **B1** ≥90 Gew.-%, insbesondere ≥95 Gew.-%, insbesondere bevorzugt ≥99 Gew.-%, bezogen auf das Gesamtgewicht der Polyisocyanatkomponente **K2,** aufweist.

Eine solche Zusammensetzung ist insbesondere als Vergussmasse geeignet.

Eine weitere bevorzugte zweikomponentige Polyurethanzusammensetzung besteht: aus einer Polyolkomponente **K1,** welche:
- 30 bis 70 Gewichts-%, bevorzugt 40 bis 60 Gewichts-%, insbesondere 45 bis 55 Gewichts-%, der Summe **(A1+A2+A3+A4);** und
- 20 bis 60 Gewichts-%, bevorzugt 30 bis 50 Gewichts-%, insbesondere 35 bis 45 Gewichts-%, Füllstoffe, insbesondere Füllstoffe ausgewählt aus der Gruppe bestehend aus Calciumcarbonat, Kaolin, Baryt, Talk, Quarzmehl, Dolomit, Wollastonit, Kaolin, calciniertes Kaolin, und Mica, besonders bevorzugt Calciumcarbonat und Rheologiemodifizierer wie insbesondere hydrophobe amorphe Kieselsäuren; und
- 0 bis 5 Gewichts-%, bevorzugt 1 bis 4 Gewichts-%, insbesondere bevorzugt 2 bis 4 Gewichts-%, Katalysatoren für die Beschleunigung der Reaktion von Hydroxylgruppen mit Isocyanatgruppen;
- 0 bis 5 Gewichts-%, bevorzugt 0.5 bis 3 Gewichts-%, insbesondere bevorzugt 1 bis 2 Gewichts-%, Trocknungsmittel (insbesondere Zeolithe);
- bezogen auf das Gesamtgewicht der Polyolkomponente K1, enthält, insbesondere daraus besteht,
und aus einer Polyisocyanatkomponente **K2,** welche:
- einen Anteil des aromatischen Polyisocyanats **B1** ≥90 Gew.-%, insbesondere ≥95 Gew.-%, insbesondere bevorzugt ≥99 Gew.-%, bezogen auf das Gesamtgewicht der Polyisocyanatkomponente **K2,** aufweist.

Eine solche Zusammensetzung ist insbesondere als Klebstoff geeignet.

Eine weitere bevorzugte zweikomponentige Polyurethanzusammensetzung besteht: aus einer Polyolkomponente **K1,** welche:
- 90 bis 100 Gewichts-%, bevorzugt 95 bis 97 Gewichts-%, der Summe **(A1+A2+A3+A4);** und
- 0 bis 5 Gewichts-%, bevorzugt 0 bis 2 Gewichts-%, insbesondere 0 bis 0.5 Gewichts-%, besonders bevorzugt weniger als 0.1 Gewichtsprozent, am meisten bevorzugt keine Füllstoffe, insbesondere Füllstoffe ausgewählt aus der Gruppe bestehend aus Calciumcarbonat, Kaolin, Baryt, Talk, Quarzmehl, Dolomit, Wollastonit, Kaolin, calciniertes Kaolin, und Mica, besonders bevorzugt Calciumcarbonat und Rheologiemodifizierer wie insbesondere hydrophobe amorphe Kieselsäuren; und
- 0 bis 5 Gewichts-%, bevorzugt 0 bis 2 Gewichts-%, insbesondere bevorzugt 0 bis 0.5 Gewichts-%, besonders bevorzugt 0 bis 0.3 Gewichts-%, Katalysatoren für die Beschleunigung der Reaktion von Hydroxylgruppen mit Isocyanatgruppen;
- 0 bis 5 Gewichts-%, bevorzugt 0.5 bis 3 Gewichts-%, insbesondere bevorzugt 1 bis 2 Gewichts-%, Trocknungsmittel (insbesondere Zeolithe);
- bezogen auf das Gesamtgewicht der Polyolkomponente K1, enthält, insbesondere daraus besteht,
und aus einer Polyisocyanatkomponente **K2,** welche:
- einen Anteil des aromatischen Polyisocyanats **B1** ≥90 Gew.-%, insbesondere ≥95 Gew.-%, insbesondere bevorzugt ≥99 Gew.-%, bezogen auf das Gesamtgewicht der Polyisocyanatkomponente **K2,** aufweist.

Eine solche Zusammensetzung ist insbesondere als Infusionsharz geeignet.

Die Herstellung der beiden Komponenten erfolgt getrennt voneinander und, zumindest für die zweite Komponente, vorzugsweise unter Ausschluss von Feuchtigkeit. Beide Komponenten werden typischerweise jeweils in einem eigenen Gebinde gelagert. Die weiteren Bestandteile der Polyurethanzusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils die erste Komponente beziehungsweise die zweite Komponente der Zusammensetzung enthält.

Das Mischen erfolgt typischerweise über Statikmischer oder mit Hilfe von dynamischen Mischern. Beim Mischen ist darauf zu achten, dass die beiden Komponenten möglichst homogen vermischt werden. Werden die zwei Komponenten unvollständig gemischt, treten lokale Abweichungen vom vorteilhaften Mischungsverhältnis auf, was sich in einer Verschlechterung der mechanischen Eigenschaften auswirken kann.

Beim Kontakt der ersten Komponente mit Isocyanatgruppen der zweiten Komponente beginnt die Aushärtung durch chemische Reaktion. Dabei reagieren die vorhandenen Hydroxylgruppen und gegebenenfalls vorhandene weitere gegenüber Isocyanatgruppen reaktive Substanzen mit vorhandenen Isocyanatgruppen. Überschüssige Isocyanatgruppen reagieren mit vorhandener Feuchtigkeit. Als Resultat dieser Reaktionen härtet die Polyurethanzusammensetzung zu einem festen Material aus. Dieser Vorgang wird auch als Vernetzung bezeichnet.

Ein weiterer Gegenstand der Erfindung ist somit auch eine ausgehärtete Polyurethanzusammensetzung, erhalten aus der Aushärtung der Polyurethanzusammensetzung wie im vorliegenden Dokument beschrieben.

Die beschriebene zweikomponentige Polyurethanzusammensetzung ist vorteilhaft verwendbar als struktureller Klebstoff, als Vergussmasse oder als Infusionsharz.

Die Erfindung betrifft somit auch ein Verfahren zum Verkleben von einem ersten Substrat mit einem zweiten Substrat, welches die Schritte umfasst:
- Mischen der vorgängig beschriebenen Polyolkomponente **K1** und Polyisocyanatkomponente **K2,**
- Applizieren der vermischten Polyurethanzusammensetzung auf mindestens eine der zu verklebenden Substratoberflächen,
- Fügen der zu verklebenden Substrate innerhalb der Offenzeit,
- Aushärten der Polyurethanzusammensetzung.

Dabei können die beiden Substrate aus dem gleichen oder unterschiedlichen Materialien bestehen.

Die Erfindung betrifft somit weiterhin auch ein Verfahren zum Verfüllen von Fugen und Spalten zwischen zwei Substraten, welches die Schritte umfasst:
- Mischen der vorgängig beschriebenen Polyolkomponente **K1** und Polyisocyanatkomponente **K2,**
- Applizieren der vermischten Polyurethanzusammensetzung in die Fuge oder den Spalt,
- Aushärten der Polyurethanzusammensetzung.

In diesen Verfahren zum Verkleben oder zum Verfüllen von Fugen und Spalten sind geeignete Substrate insbesondere
- Glas, Glaskeramik, Glasmineralfasermatten;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie kohlefaserverstärkte Kunststoffe (CFK), glasfaserverstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Mörtel, Ziegel, Gips und Natursteine wie Granit, Kalk- und Standstein oder Marmor.

In diesen Verfahren ist eines oder beide Substrate bevorzugt ein Metall oder eine Glaskeramik oder ein Glas oder ein glasfaserverstärkter Kunststoff oder ein kohlefaserverstärkter Kunststoff oder ein Thermoset auf Epoxybasis.

Die Substrate können bei Bedarf vor dem Applizieren der Zusammensetzung vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Aus dem beschriebenen Verfahren zum Verkleben entsteht ein Artikel, bei welchem die Zusammensetzung zwei Substrate miteinander verbindet.

Dieser Artikel ist insbesondere ein Sandwichelement einer Leichtbaustruktur, ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Schienenfahrzeug oder ein Schiff, sowie ein Flugzeug oder ein Helikopter; oder ein Anbauteil eines solchen Artikels.

Die beschriebene zweikomponentige Polyurethanzusammensetzung zeichnet sich unter anderem dadurch aus, dass sie eine schwach ausgeprägte Abhängigkeit der mechanischen Eigenschaften, insbesondere der Zugfestigkeit und der E-moduli, von der Temperatur aufweisen. Aufgrund dieser Eigenschaften ist sie ganz besonders geeignet als struktureller Klebstoff für Verklebungen, welche unter Umgebungstemperaturen im Freien beansprucht werden.

Ein weiterer Gegenstand der Erfindung ist somit auch die Verwendung der beschriebenen Polyurethanzusammensetzung als struktureller Klebstoff zum Verkleben von zwei Substraten.

Ebenfalls vorteilhaft verwendbar ist die beschriebene Polyurethanzusammensetzung als Vergussmasse, insbesondere als Vergussmasse für das Verfüllen von Spalten und Fugen, zu Reparaturzwecken, als Ballastausgleichsmasse oder zum Schutz von elektronischen Bauteilen.

Die Polyurethanzusammensetzung wird weiter vorzugsweise als Vergussmasse, insbesondere als Elektrovergussmasse, eingesetzt. In einem weiteren Aspekt umfasst die Erfindung daher die Verwendung einer zweikomponentigen Polyurethanzusammensetzung als Vergussmasse, insbesondere als Elektrovergussmasse.

Typische Bespiele für Anwendungen der erfindungsgemässen Polyurethanzusammensetzungen findet sich auf dem Gebiet der Elektrovergussmassen.

In einem weiteren Aspekt umfasst die Erfindung daher ein Verfahren zum Verfüllen von Fugen und Spalten in einem Substrat umfassend die Schritte
a) Mischen der Polyolkomponente **(K1)** und der Polyisocyanatkomponente **(K2)** einer zweikomponentigen Polyurethanzusammensetzung wie sie vorgehend beschrieben ist,
b) Applizieren der vermischten Polyurethanzusammensetzung in die zu verfüllende Fuge oder den zu verfüllenden Spalt des Substrates,
c) Aushärten der Polyurethanzusammensetzung in der Fuge oder im Spalt.

Als Substrate besonders geeignet sind Metall, Kunststoff, Holz, Glas, Keramik und faserverstärkte Kunststoffe, insbesondere Metall und faserverstärkte Kunststoffe.

In einem weiteren Aspekt umfasst die Erfindung daher auch einen verfüllten Artikel, welcher nach dem vorgehend beschriebenen Verfahren verfüllt wurde.

Ein weiterer Gegenstand der Erfindung ist auch die Verwendung der beschriebenen Polyurethanzusammensetzung als Infusionsharz, insbesondere zur Herstellung von faserverstärkten Verbundwerkstoffteilen, besonders bevorzugt in Infusionsverfahren. Für die Verwendung als Infusionsharz, insbesondere als Infusionsharz für Verbundbauteile, weist die zweikomponentige Polyurethanzusammensetzung (2K-PU-Zusammensetzung) vorzugsweise eine Viskosität in gemischter Form von 500 bis 5000 mPas auf (gemessen mit Brookfield RTV, Drehzahl 10 U/min, Kegel/Platte, CP 50/1), gemessen bei einer Temperatur zwischen 20 und 40°C. Insbesondere soll die Viskosität von 1000 bis 2000 mPas betragen, gemessen bei 20 bis 40°C. Die Viskosität soll unmittelbar nach dem Mischen bestimmt werden, beispielsweise bis zu 2 min nach dem Mischen, durch die einsetzende Vernetzungsreaktion nimmt sie langsam zu.

Die erfindungsgemässe 2K-PU-Zusammensetzung hat eine relativ kurze Offenzeit. Diese soll über 2 min. betragen, insbesondere über 5 min. liegen. Als Mass für die Offenzeit kann die "Gelation Time [min]" bestimmt werden anhand der Zeit bis zur Klebefreiheit ("tack-free time"), wie nachstehend in den Beispielen beschrieben.

Ein weiterer Gegenstand der Erfindung ist auch ein Verfahren zum Herstellen von faserverstärkten Verbundwerkstoffteilen und einer vorgehend beschriebenen zweikomponentigen Polyurethanzusammensetzung, dadurch gekennzeichnet, dass die Polyolkomponente **K1** und die Polyisocyanatkomponente **K2** gemischt werden und danach, insbesondere weniger als 5 min nach dem Vermischen, vorzugsweise unmittelbar nach dem Vermischen, unter Vakuum und/oder Druck in eine die Fasern enthaltende Form eingebracht wird.

Das Mischen der Polyolkomponente K1 mit der Polyisocyanatkomponente K2 kann batch-weise oder kontinuierlich, vorzugsweise kontinuierlich, erfolgen.

Überraschenderweise wurde gefunden, dass die erfindungsgemässen Zusammensetzungen besonders beständig gegenüber Schäumen durch die Reaktion von Isocyanat mit in der Polyolkomponente K1 verbleibenden Restfeuchtigkeit ist. Daher kann auf eine Trocknung, typischerweise durch Vakuum, der Polyolkomponente K1 verzichtet werden, was verfahrenstechnisch ein grosser Vorteil ist. Es kann daher vorteilhaft sein, wenn an die Polyolkomponente **K1** weniger als 1 Tag, vorzugsweise weniger als 5 h, vor dem Vermischen kein Vakuum angelegt wird, insbesondere von weniger als 200 mbar, insbesondere weniger als 100 mbar, insbesondere weniger als 50 mbar, bevorzugt 20 - 5 mbar, für mehr als 10 min, insbesondere mehr als 30 min, vorzugsweise von 30 - 120 min. Es kann weiter vorteilhaft sein, wenn an die Mischung der Polyolkomponente **K1** und der Polyisocyanatkomponente **K2** vor dem Einbringen in die Form kein Vakuum angelegt wird, insbesondere von weniger als 200 mbar, insbesondere weniger als 100 mbar, insbesondere weniger als 50 mbar, bevorzugt 20 - 5 mbar, für mehr als 1 min, insbesondere mehr als 10 min, vorzugsweise von 10 - 30 min.

Die erfindungsgemässen Zusammensetzungen können durch Vakuum und /oder Druck in die Form eingebracht werden. Dabei ist darauf zu achten, dass die Fliessgeschwindigkeit so gewählt wird, dass Luft oder Gase zwischen den Fasermaterialien entweichen können.

Bei einer anderen Arbeitsweise wird die Form, die das Fasermaterial enthält, mit einer Folie abgedeckt und am Rand vakuumdicht verschlossen. Die Form hat Öffnungen, durch die ein Unterdruck an die Form angelegt werden kann. Durch den Unterdruck wird die erfindungsgemässe Mischung gleichmässig in die Form gesaugt. Bei dieser Arbeitsweise ist es vorteilhaft, dass durch den Unterdruck mögliche Einschlüsse von Blasen vermindert werden können. Solche Infusionsverfahren sind dem Fachmann im Prinzip bekannt.

Durch die Grösse der Formen, die auch mehr als 30 m lang sein können, ist eine Befüllung nur langsam möglich. Die erfindungsgemässen Zusammensetzungen haben eine Offenzeit, die ein langsames Anfliessen an die Fasermaterialien und Penetrieren derselben, ein Verdrängen der Luftblasen und ein Füllen der Form über einen längeren Zeitraum gestatten. Dabei werden die Fasermaterialien vollständig in dem Matrixmaterial eingebettet.

Vorzugsweise wird die Mischung der Polyolkomponente **K1** und der Polyisocyanatkomponente **K2** bei 15°C bis 35°C eingetragen.

Nach dem Füllen der Form beginnt die Zusammensetzung auszuhärten. Das kann ohne zusätzliche Wärmezufuhr geschehen. Um die Vernetzungsreaktion zu beschleunigen ist es möglich, nach dem vollständigen Befüllen der Form mit der Zusammensetzung diese zu erwärmen. Die Erwärmung kann auf Temperaturen bis zu 80°C durchgeführt werden. Die Aushärtung kann auch im Vakuum oder unter Druck erfolgen.

Überraschenderweise wurde gefunden, dass die erfindungsgemässen Zusammensetzungen besonders beständig gegenüber Schäumen durch eine Reaktion der Isocyanatgruppen mit verbleibender Restfeuchtigkeit in dem Fasermaterial, insbesondere in Glasfasern ist. Daher kann bei der Verwendung der erfindungsgemässen Zusammensetzungen auf eine Trocknung der Fasern, insbesondere durch Erwärmen und/oder Vakuum, verzichtet werden, was ein grosser verfahrenstechnischer Vorteil ist.

Es kann weiter vorteilhaft sein, wenn die Fasern weniger als 24 h, vorzugsweise weniger als 12 h, insbesondere weniger als 6 h, vor dem Einbringen der Mischung der Polyolkomponente **K1** und der Polyisocyanatkomponente **K2** in die die Fasern enthaltende Form, nicht getrocknet werden, insbesondere nicht getrocknet werden durch Anlegen von Vakuum, insbesondere von weniger als 100 mbar, insbesondere weniger als 50 mbar, bevorzugt 20 - 1 mbar für mehr als 60 min, insbesondere mehr als 120 min, vorzugsweise von 1 - 12 h, insbesondere bevorzugt 2 - 8 h, und/oder Erwärmen für mehr als 60 min, vorzugsweise mehr als 120 min, insbesondere bevorzugt für 1 - 12 h, insbesondere bevorzugt 2 - 8 h, auf eine Temperatur über 50°C, insbesondere über 55°C, besonders bevorzugt auf eine Temperatur von 60 - 80°C.

Im Fall von Zusammensetzungen des Stands der Technik kann es für eine Verbesserung der Eigenschaften der vernetzten Zusammensetzungen auch vorteilhaft sein, nach der Aushärtung der Zusammensetzung die Formteile einem Temperprozess zu unterwerfen. Damit kann bei erfolgter Vernetzung die mechanische Stabilität der ausgehärteten Zusammensetzungen bei thermischer Belastung verbessert werden. Dies ist beispielsweise im Vergleich der Messwerte für die Zusammensetzungen R1 und R2 ersichtlich. Die mechanischen Eigenschaften, insbesondere die Zugfestigkeiten und die E-module, weisen höhere Werte im Fall von einer Aushärtung für 3 h bei 80°C gegenüber der Aushärtung für 7 d bei RT auf.

Überraschenderweise wurde gefunden, dass es bei den erfindungsgemässen Zusammensetzungen solche Temperprozesse zur Erreichung guter mechanischer Eigenschaften nicht nötig sind (die Werte für 3 h bei 80°C sind mit den Werten bei 7 d bei RT vergleichbar wenn nicht sogar überlegen) und die erfindungsgemässen Zusammensetzungen gegenüber dem Stand der Technik sogar noch höhere mechanische Eigenschaften aufweisen. Das Weglassen von Zeit- und Energie-intensiven Temperprozessen ist verfahrenstechnisch ein grosser Vorteil.

Es kann weiter vorteilhaft sein, wenn das Verbundbauteil nach der Aushärtung nicht einem Temperprozess unterworfen wird, insbesondere nicht für einen Zeitraum zwischen 30 min - 24 Stunden auf eine erhöhte Temperatur zwischen 40 bis 90°C gebracht wird.

Die erfindungsgemässen Zusammensetzungen zeigen eine gute Haftung auf den Fasersubstraten. Weiter kann eine fehlerfreie Matrix erzeugt werden, insbesondere Blasen werden in dem Formteil vermieden, ohne dass die Polyolkomponente oder die Fasern getrocknet werden müssen.

Als Fasern im erfindungsgemässen Verfahren sind bekannte hochfeste Fasern geeignet. Vorzugsweise sind die die Fasern ausgewählt aus der Gruppe bestehend aus Naturfasern, Glasfasern, Kohlefasern, Kunststofffasern, Keramikfasern und Metallfasern, insbesondere Glasfasern und Kohlefasern, besonders bevorzugt Glasfasern.

Bevorzugt werden diese Fasern als Matten, Gewebe und Gelege, bevorzugt als Gewebe, insbesondere bevorzugt als Gewebe bestehend aus Bündeln von Endlosfasern, insbesondere Endlosfasern aus Glas, eingesetzt.

Solche hochfesten Fasern, Gelege und Gewebe sind dem Fachmann bekannt. Sie werden beispielsweise im Flugzeugbau, Bootsbau, Fahrzeugbau oder bei anderen mechanisch hoch belasteten Bauteilen wie Blättern von Windturbinen eingesetzt.

Ein weiterer Gegenstand der Erfindung ist auch ein Faserverbundwerkstoff erhalten aus dem erfindungsgemässen Verfahren sowie ein Faserverbundwerkstoff bestehend aus Fasern und einer vorgehend beschriebenen ausgehärteten zweikomponentigen Polyurethanzusammensetzung, vorzugsweise sind die Fasern in der zweikomponentigen Polyurethanzusammensetzung eingebettet.

Wird die zweikomponentige Polyurethanzusammensetzung als Klebstoff oder Infusionsharz eingesetzt, weist die ausgehärtete Zusammensetzung vorzugsweise folgende Eigenschaften auf (gemäss den nachfolgend im Beispielteil verwendeten Messverfahren/Messbedingungen, Aushärtungsbedingungen 3h bei 80°C):

| | |
|---|---|
| TS [MPa] | 16 - 40 |
| E-modul 0.05-0.25% [MPa] | 300 - 2000 |
| E-modul 0.5-5% [MPa] | 105 - 600 |
| 1.Tg (°C) | -62 bis -66 |
| 2.Tg (°C) | 66 - 100 |

### Beispiele

### verwendete Substanzen:

| | |
|---|---|
| Setathane 1150 | Umsetzungsprodukt von Rizinusöl mit Ketonharz, Setathane® 1150, OH-Zahl von 155 mg KOH/g, OH-Equivalenzgewicht von ca. 360 g/eq, Nuplex Resins GmbH, Deutschland |
| Desmophen T 4011 | propoxyliertes 1,1,1-Trimethylolpropan, Desmophen® 4011 T, OH-Zahl von 550 ± 25 mg KOH/g, Molekulargewicht von ca. 300±20 g/mol, Covestro AG, Deutschland |
| Polyvest HT | Polybutadienpolyol mit primären OH-Gruppen, Polyvest^{®} HT, OH-Funktionalität 2.4-2.6, mittleres Molekulargewicht ca. 2800 g/mol, OH-Zahl 48-50 mg KOH/g (Evonik AG, Deutschland) |
| Zr-Katalysator | Zirkonium-Chelat-Komplex, Zr-Gehalt 3.5 Gewichts-% (K-Kat^{®} A-209 von King Industries Inc., USA) |
| Sylosiv | Zeolith (Sylosiv® A3 von W. R. Grace & Co., USA) |
| Desmodur VL | Polymeres MDI, mittlere NCO-Funktionalität von 2.5, Desmodur® VL, Covestro AG, Deutschland |

### Herstellung von Polyurethanzusammensetzungen

Für jede Zusammensetzung wurden die in den Tabellen 1 bis 7 angegebenen Inhaltsstoffe in den angegebenen Mengen (in Gewichtsteilen) der Polyolkomponente **K1** mittels eines Vakuumdissolvers unter Feuchtigkeitsausschluss zu einer homogenen Paste verarbeitet und aufbewahrt. Ebenso wurden die in den Tabellen 1 bis 7 angegebenen Inhaltsstoffe der Polyisocyanatkomponente **K2** verarbeitet und aufbewahrt. Anschliessend wurden die beiden Komponenten mittels eines SpeedMixers^{®} (DAC 150 FV, Hauschild) während 30 Sekunden zu einer homogenen Paste verarbeitet und diese unverzüglich folgendermassen geprüft:
Zur Bestimmung der mechanischen Eigenschaften wurde der Klebstoff in Hantelform gemäss ISO 527, Teil 2, 1B, gebracht und während 7 Tagen im Normklima (23°C, 50% relative Feuchtigkeit) oder nach Lagerung im Normklima für 12-24 h während 3h bei 80°C gelagert bzw. ausgehärtet. Danach wurde bei Raumtemperatur das Elastizitätsmodul im Bereich von 0.05 bis 0.25% Dehnung (" **E-Modul",** "Em 0.05-0.25%"), das Elastizitätsmodul im Bereich von 0.5 bis 5% Dehnung (" **E-Modul",** "Em 0.5-5%"), die **Zugfestigkeit** (tensile strength, "TS") und die **Bruchdehnung** (elongation at break, "EB") der so hergestellten Probekörper gemäss ISO 527 auf einer Zwick Z020 Zugprüfmaschine bei einer Prüfgeschwindigkeit von 10 mm/ min gemessen.

Die **Glasübergangstemperatur,** in den Tabellen abgekürzt mit **T_{g},** wurde bestimmt anhand von DMTA-Messungen an streifenförmigen Proben (Höhe 2-3 mm, Breite 2-3 mm, Länge 8.5 mm), welche während 24 h bei 23°C und anschließend während 3h bei 80°C gelagert bzw. ausgehärtet wurden, mit einem Mettler DMA/SDTA 861 e Gerät. Die Messbedingungen waren: Messung im Zugmodus, 10 Hz Anregungsfrequenz und Aufheizrate 5 K/min. Die Proben wurden auf -70°C abgekühlt und unter Bestimmung des komplexen Elastizitatsmoduls **E*** [MPa] auf 200°C erwärmt, wobei ein Maximum in der Kurve für den Verlustwinkel "tan δ" als Tg-Wert abgelesen wurde.

Die Resultate sind in den Tabellen 1 bis 7 angegeben.

**Tabelle 1**

| | R1 | R2 | R3 | E1 | E1a | E2 | E3 | E4 | E5 | E6 | E7 | E8 | E9 | E10 |
|---|---|---|---|---|---|---|---|---|---|---|---|---|---|---|
| Polyolkomp. **K1** | | | | | | | | | | | | | | |
| **A1** Setathane 1150 | 64 | 64 | 64 | 64 | 64 | 64 | 64 | 64 | 64 | 64 | 64 | 64 | 64 | 64 |
| **A2** Desmophen T 4011 | 4 | 4 | 4 | 4 | 4 | 4 | 4 | 4 | 4 | 4 | 4 | 4 | 4 | 4 |
| **A3** 1,4 Butandiol | | | 2 | 4 | 2 | 2 | 4 | 4 | 6 | 6 | 8 | 8 | 10 | 10 |
| **A4** Polyvest HT | 20 | 32 | 32 | 32 | 20 | 20 | 20 | 20 | 20 | 20 | 20 | 20 | 20 | 20 |
| Katalysator | 0.3 | 0.3 | 0.3 | 0.3 | 0.3 | 0.3 | 0.3 | 0.3 | 0.3 | 0.3 | 0.3 | 0.3 | 0.3 | 0.3 |
| Sylosiv | 2 | 2 | 2 | 2 | 2 | 2 | 2 | 2 | 2 | 2 | 2 | 2 | 2 | 2 |
| Polyisocyanatkomp. **K2** | | | | | | | | | | | | | | |
| Desmodur VL | 100 | 100 | 100 | 100 | 100 | 100 | 100 | 100 | 100 | 100 | 100 | 100 | 100 | 100 |
| Mixing ratio | 37.4 | 34.4 | 43.5 | 49.4 | 47.3 | 43.5 | 53.8 | 49.4 | 60 | 55.1 | 66 | 60.5 | 71.6 | 65.7 |
| NCO/OH-ratio | 1.1 | 1.1 | 1.2 | 1.2 | 1.2 | 1.1 | 1.2 | 1.1 | 1.2 | 1.1 | 1.2 | 1.1 | 1.2 | 1.1 |
| (A1+A2)/(A3+A4) | 3.4 | 2.1 | 2.0 | 1.9 | 3.1 | 3.1 | 2.8 | 2.8 | 2.6 | 2.6 | 2.4 | 2.4 | 2.3 | 2.3 |
| (A4 / A3) | - | - | 16.0 | 8.0 | 10.0 | 10.0 | 5.0 | 5.0 | 3.3 | 3.3 | 2.5 | 2.5 | 2.0 | 2.0 |
| Gelation Time [min] | 25 | 30 | 25 | 15 | 25 | 28 | 20 | 16 | 10 | 15 | 10 | 11 | 10 | 4 |
| **3h at 80°C** | | | | | | | | | | | | | | |
| TS [MPa] | 13.5 | 9.5 | 13.5 | 15.9 | 17.7 | 15.7 | 18.6 | 19.1 | 23.6 | 22.1 | 26.3 | 24 | 25.5 | 29.3 |
| EB [%] | 125.1 | 122.3 | 105.7 | 96.9 | 108.1 | 78 | 88 | 62 | 75.2 | 40 | 34.1 | 48 | 30.8 | 41 |
| Em0.05-0.25%[MPa] | 81 | 31 | 264 | 335 | 383 | 362 | 540 | 446 | 907 | 684 | 1050 | 1060 | 1510 | 634 |
| Em 0.5-5%[MPa] | 22 | 7 | 107 | 218 | 157 | 206 | 293 | 331 | 451 | 413 | 506 | 430 | 472 | 555 |
| 1.Tg (°C) | -62 | -60 | -62 | -62 | -64 | -65 | -64 | -64 | -63 | -66 | -63 | -64 | -64 | -65 |
| 2.Tg (°C) | 55 | 52 | 66 | 71 | 67 | 69 | 73 | 76 | 81 | 81 | 88 | 88 | 87 | 96 |
| **7d RT** | | | | | | | | | | | | | | |
| TS [MPa] | 11.5 | 7.76 | 13.1 | 15.6 | 16.3 | | 19.6 | | 27.2 | | 29.1 | | 27.4 | |
| EB [%] | 113.4 | 101.1 | 89.2 | 88.4 | 89.8 | | 79.5 | | 75.6 | | 13.2 | | 20.1 | |
| Em0.05-0.25%[MPa] | 73 | 15.4 | 211 | 494 | 509 | | 410 | | 842 | | 738 | | 1170 | |
| Em 0.5-5%[MPa] | 22 | 5 | 135 | 266 | 214 | | 384 | | 566 | | 627 | | 530 | |

**Tabelle 2**

| | E11 | E12 | E13 | E14 | E15 | E16 |
|---|---|---|---|---|---|---|
| Polyolkomp. **K1** | | | | | | |
| **A1** Setathane 1150 | 64 | 64 | 64 | 64 | 64 | 64 |
| **A2** Desmophen T 4011 | 4 | 4 | 4 | 4 | 4 | 4 |
| **A3** 1,4 Butandiol | 12 | 12 | 14 | 14 | 16 | 16 |
| **A4** Polyvest HT | 20 | 20 | 20 | 20 | 20 | 20 |
| Katalysator | 0.3 | 0.3 | 0.3 | 0.3 | 0.3 | 0.3 |
| Sylosiv | 2 | 2 | 2 | 2 | 2 | 2 |
| Polyisocyanatkomp. **K2** | | | | | | |
| Desmodur VL | 100 | 100 | 100 | 100 | 100 | 100 |
| Mixing ratio | 77 | 70.7 | 82.2 | 75.5 | 87.1 | 80.1 |
| NCO/OH-ratio | 1.2 | 1.1 | 1.2 | 1.1 | 1.2 | 1.1 |
| (A1+A2)/(A3+A4) | 2.1 | 2.1 | 2.0 | 2.0 | 1.9 | 1.9 |
| (A4 / A3) | 1.7 | 1.7 | 1.4 | 1.4 | 1.3 | 1.3 |
| Gelation Time [min] | 10 | 3 | 7 | 7 | 6 | 3 |
| **3h at 80°C** | | | | | | |
| TS [MPa] | 26.2 | 32.1 | 29.1 | 29.1 | 26.7 | 31.6 |
| EB [%] | 23.9 | 53 | 18.7 | 18.7 | 13 | 27.2 |
| Em0.05-0.25%[MPa] | 737 | 441 | 1730 | 1730 | 923 | 1350 |
| Em 0.5-5%[MPa] | 515 | 611 | 550 | 550 | 517 | 594 |
| 1.Tg (°C) | -65 | -65 | -64 | -64 | -64 | -63 |
| 2.Tg (°C) | 94 | 100 | 93 | 96 | 94 | 100 |
| **7d RT** | | | | | | |
| TS [MPa] | 27.5 | | 28.3 | | 25.6 | 28.3 |
| EB [%] | 13.9 | | 15.1 | | 7.6 | 15.1 |
| Em0.05-0.25%[MPa] | 923 | | 846 | | 779 | 846 |
| Em 0.5-5%[MPa] | 531 | | 548 | | 554 | 548 |

**Tabelle 3**

| | | R1 | R2 | R4 | E17 | E18 | E19 | E20 | E21 | E22 |
|---|---|---|---|---|---|---|---|---|---|---|
| Polyolkomp. **K1** | | | | | | | | | | |
| **A1** Setathane 1150 | | 64 | 64 | 64 | 64 | 64 | 64 | 64 | 64 | 64 |
| **A2** Desmophen T 4011 | | 4 | 4 | 4 | 4 | 4 | 4 | 4 | 4 | 4 |
| **A3** 2-Ethyl-1,3-hexandiol | | | | 2 | 2 | 4 | 8 | 12 | 16 | 20 |
| **A4** Polyvest HT | | 20 | 32 | 32 | 20 | 20 | 20 | 20 | 20 | 20 |
| Katalysator | | 0.3 | 0.3 | 0.3 | 0.3 | 0.3 | 0.3 | 0.3 | 0.3 | 0.3 |
| Sylosiv | | 2 | 2 | 2 | 2 | 2 | 2 | 2 | 2 | 2 |
| Polyisocyanatkomp. **K2** | | | | | | | | | | |
| Desmodur VL | | 100 | 100 | 100 | 100 | 100 | 100 | 100 | 100 | 100 |
| Mixing ratio | | 37.4 | 34.4 | 37.6 | 40.9 | 44.2 | 50.5 | 56.3 | 61.6 | 66.6 |
| NCO/OH-ratio | | 1.1 | 1.1 | 1.1 | 1.1 | 1.1 | 1.1 | 1.1 | 1.1 | 1.1 |
| (A1+A2)/(A3+A4) | | 3.4 | 2.1 | 2.0 | 3.1 | 2.8 | 2.4 | 2.1 | 1.9 | 1.7 |
| (A4 / A3) | | - | - | 16.0 | 10.0 | 5.0 | 2.5 | 1.7 | 1.3 | 1.0 |
| Gelation Time [min] | | 25 | 30 | 40 | 20 | 20 | 17 | 24 | 22 | 18 |
| **3h at 80°**C | | | | | | | | | | |
| TS [MPa] | | 13.5 | 9.5 | 11.3 | 16.8 | 18.1 | 20.8 | 25.3 | 28.5 | 30.7 |
| EB [%] | | 125.1 | 122.3 | 130.2 | 114.4 | 127.4 | 102.8 | 66.1 | 53 | 17.9 |
| Em0.05-0.25%[MPa] | | 81 | 31 | 58.8 | 326 | 244 | 744 | 605 | 852 | 2040 |
| Em 0.5-5%[MPa] | | 22 | 7 | 17 | 115 | 119 | 331 | 524 | 575 | 589 |
| 1.Tg (°C) | | -62 | -60 | -61 | -62 | -63 | -64 | -64 | -64 | -65 |
| 2.Tg (°C) | | 55 | 52 | 57 | 62 | 66 | 76 | 82 | 89 | 92 |
| **7d RT** | | | | | | | | | | |
| TS [MPa] | | 11.5 | 7.76 | 9.36 | 15.2 | 17.4 | 24.1 | 29.2 | 33.1 | 33.1 |
| EB [%] | | 113.4 | 101.1 | 118.4 | 104 | 101 | 76 | 17 | 20 | 18 |
| Em0.05-0.25%[MPa] | | 73 | 15.4 | 47.8 | 224 | 608 | 1470 | 598 | 1820 | 815 |
| Em 0.5-5%[MPa] | | 22 | 5 | 14 | 115 | 186 | 434 | 624 | 636 | 706 |

**Tabelle 4**

| | | R1 | E23 | E24 | E25 | E26 | E27 | E28 | E29 | E30 | E31 | E32 |
|---|---|---|---|---|---|---|---|---|---|---|---|---|
| Polyolkomp. **K1** | | | | | | | | | | | | |
| **A1** Setathane 1150 | | 64 | 64 | 64 | 64 | 64 | 64 | 64 | 64 | 64 | 64 | 64 |
| **A2** Desmophen T 4011 | | 4 | 4 | 4 | 4 | 4 | 4 | 4 | 4 | 4 | 4 | 4 |
| **A3** 3-Methyl-1,5-pentandiol | | | 2 | 2 | 4 | 4 | 6 | 6 | 8 | 8 | 10 | 10 |
| **A4** Polyvest HT | | 20 | 20 | 20 | 20 | 20 | 20 | 20 | 20 | 20 | 20 | 20 |
| Katalysator | | 0.3 | 0.3 | 0.3 | 0.3 | 0.3 | 0.3 | 0.3 | 0.3 | 0.3 | 0.3 | 0.3 |
| Sylosiv | | 2 | 2 | 2 | 2 | 2 | 2 | 2 | 2 | 2 | 2 | 2 |
| Polyisocyanatkomp. **K2** | | | | | | | | | | | | |
| Desmodur VL | | 100 | 100 | 100 | 100 | 100 | 100 | 100 | 100 | 100 | 100 | 100 |
| Mixing ratio | | 37.4 | 45.5 | 41.9 | 50.2 | 46.2 | 54.7 | 50.3 | 59.1 | 54.3 | 63.2 | 58.1 |
| NCO/OH-ratio | | 1.1 | 1.2 | 1.1 | 1.2 | 1.1 | 1.2 | 1.1 | 1.2 | 1.1 | 1.2 | 1.1 |
| (A1+A2)/(A3+A4) | | 3.4 | 3.1 | 3.1 | 2.8 | 2.8 | 2.6 | 2.6 | 2.4 | 2.4 | 2.3 | 2.3 |
| (A4 / A3) | | - | 10.0 | 10.0 | 5.0 | 5.0 | 3.3 | 3.3 | 2.5 | 2.5 | 2.0 | 2.0 |
| Gelation Time [min] | | 25 | 20 | 26 | 15 | 17 | 15 | 14 | 10 | 12 | 15 | 5 |
| **3h at 80°**C | | | | | | | | | | | | |
| TS [MPa] | | 13.5 | 18.5 | 17.8 | 20.5 | 19.6 | 19.6 | 19.1 | 22.2 | 20.7 | 23.8 | 24.2 |
| EB [%] | | 125.1 | 121.9 | 97 | 112.9 | 101 | 100.2 | 76 | 98.7 | 64 | 28.5 | 33 |
| Em0.05-0.25%[MPa] | | 81 | 302 | 445 | 555 | 457 | 517 | 522 | 624 | 686 | 1130 | 740 |
| Em 0.5-5%[MPa] | | 22 | 117 | 153 | 241 | 280 | 330 | 355 | 421 | 373 | 476 | 454 |
| 1.Tg (°C) | | -62 | -63 | | -64 | -63 | -65 | | -64 | | -65 | -64 |
| 2.Tg (°C) | | 55 | 64 | | 69 | 72 | 74 | | 76 | | 78 | 90 |
| **7d RT** | | | | | | | | | | | | |
| TS [MPa] | | 11.5 | 17.1 | | 19.7 | | 26.8 | | 23.8 | | 25.4 | |
| EB [%] | | 113.4 | 107.1 | | 105.2 | | 14.6 | | 68 | | 26.2 | |
| Em0.05-0.25%[MPa] | | 73 | 380 | | 771 | | 1030 | | 944 | | 952 | |
| Em 0.5-5%[MPa] | | 22 | 138 | | 296 | | 547 | | 470 | | 538 | |

**Tabelle 5**

| | | E33 | E34 | E35 | E36 | E37 | E38 |
|---|---|---|---|---|---|---|---|
| Polyolkomp. **K1** | | | | | | | |
| **A1** Setathane 1150 | | 64 | 64 | 64 | 64 | 64 | 64 |
| **A2** Desmophen T 4011 | | 4 | 4 | 4 | 4 | 4 | 4 |
| **A3** 3-Methyl-1,5-pentandiol | | 12 | 12 | 14 | 14 | 16 | 16 |
| **A4** Polyvest HT | | 20 | 20 | 20 | 20 | 20 | 20 |
| Katalysator | | 0.3 | 0.3 | 0.3 | 0.3 | 0.3 | 0.3 |
| Sylosiv | | 2 | 2 | 2 | 2 | 2 | 2 |
| Polyisocyanatkomp. **K2** | | | | | | | |
| Desmodur VL | | 100 | 100 | 100 | 100 | 100 | 100 |
| Mixing ratio | | 67.1 | 67.1 | 70.9 | 65.3 | 74.5 | 68.6 |
| NCO/OH-ratio | | 1.2 | 1.1 | 1.2 | 1.1 | 1.2 | 1.2 |
| (A1+A2)/(A3+A4) | | 2.1 | 2.1 | 2.0 | 2.0 | 1.9 | 1.9 |
| (A4 / A3) | | 1.7 | 1.7 | 1.4 | 1.4 | 1.3 | 1.3 |
| Gelation Time [min] | | 10 | 3 | 17 | 8 | 18 | 7 |
| **3h at 80°**C | | | | | | | |
| TS [MPa] | | 25.8 | 27.9 | 24.2 | 24.3 | 23.7 | 24.4 |
| EB [%] | | 24.2 | 15 | 33.1 | 69.6 | 32.7 | 46.9 |
| Em0.05-0.25%[MPa] | | 942 | 914 | 1360 | 1110 | 1130 | 1570 |
| Em 0.5-5%[MPa] | | 500 | 534 | 458 | 444 | 447 | 513 |
| 1.Tg (°C) | | -66 | | -65 | -65 | -66 | -66 |
| 2.Tg (°C) | | 85 | | 82 | 80 | 82 | 83 |
| **7d RT** | | | | | | | |
| TS [MPa] | | 20.3 | | 27.5 | | 25.7 | 20.3 |
| EB [%] | | 86.1 | | 9.1 | | 17 | 86.1 |
| Em0.05-0.25%[MPa] | | 671 | | 1250 | | 981 | 671 |
| Em 0.5-5%[MPa] | | 387 | | 512 | | 468 | 387 |

**Tabelle 6**

| | | R1 | E39 | E40 | E41 | E42 | E43 | E44 | E45 | E46 | E47 |
|---|---|---|---|---|---|---|---|---|---|---|---|
| Polyolkomp. **K1** | | | | | | | | | | | |
| **A1** Setathane 1150 | | 64 | 64 | 64 | 64 | 64 | 64 | 64 | 64 | 64 | 64 |
| **A2** Desmophen T 4011 | | 4 | 4 | 4 | 4 | 4 | 4 | 4 | 4 | 4 | 4 |
| **A3** 1,5-Pentandiol | | | 2 | 4 | 4 | 6 | 6 | 8 | 8 | 10 | 10 |
| **A4** Polyvest HT | | 20 | 20 | 20 | 20 | 20 | 20 | 20 | 20 | 20 | 20 |
| Katalysator | | 0.3 | 0.3 | 0.3 | 0.3 | 0.3 | 0.3 | 0.3 | 0.3 | 0.3 | 0.3 |
| Sylosiv | | 2 | 2 | 2 | 2 | 2 | 2 | 2 | 2 | 2 | 2 |
| Polyisocyanatkomp. **K2** | | | | | | | | | | | |
| Desmodur VL | | 100 | 100 | 100 | 100 | 100 | 100 | 100 | 100 | 100 | 100 |
| Mixing ratio | | 37.4 | 42.6 | 51.8 | 47.6 | 57 | 52.4 | 62 | 57 | 66.8 | 61.4 |
| NCO/OH-ratio | | 1.1 | 1.1 | 1.2 | 1.1 | 1.2 | 1.1 | 1.2 | 1.1 | 1.2 | 1.1 |
| (A1+A2)/(A3+A4) | | 3.4 | 3.1 | 2.8 | 2.8 | 2.6 | 2.6 | 2.4 | 2.4 | 2.3 | 2.3 |
| (A4 / A3) | | - | 10.0 | 5.0 | 5.0 | 3.3 | 3.3 | 2.5 | 2.5 | 2.0 | 2.0 |
| Gelation Time [min] | | 25 | 23 | 20 | 25 | 10 | 15 | <10 | 9 | 13 | 5 |
| **3h at 80°**C | | | | | | | | | | | |
| TS [MPa] | | 13.5 | 16.5 | 19.1 | 17.4 | 22.7 | 19.6 | 24.3 | 22.7 | 23 | 25.3 |
| EB [%] | | 125.1 | 107 | 87.3 | 84 | 79 | 49 | 68.3 | 30 | 23.9 | 41 |
| Em0.05-0.25%[MPa] | | 81 | 370 | 480 | 542 | 954 | 866 | 800 | 646 | 521 | 908 |
| Em 0.5-5%[MPa] | | 22 | 188 | 320 | 271 | 426 | 353 | 479 | 414 | 468 | 465 |
| 1.Tg (°C) | | -62 | | -65 | -63 | -65 | -63 | -64 | -64 | -62 | -64 |
| 2.Tg (°C) | | 55 | | 71 | 73 | 80 | 76 | 84 | 81 | 81 | 77 |
| **7d RT** | | | | | | | | | | | |
| TS [MPa] | | 11.5 | | 20.5 | | 25.3 | | 27.3 | | 26.5 | |
| EB [%] | | 113.4 | | 89.3 | | 59.2 | | 52.4 | | 19.2 | |
| Em0.05-0.25%[MPa] | | 73 | | 649 | | 795 | | 727 | | 843 | |
| Em 0.5-5%[MPa] | | 22 | | 376 | | 507 | | 559 | | 520 | |

**Tabelle 7**

| | | E48 | E49 | E50 | E51 | E52 | E53 |
|---|---|---|---|---|---|---|---|
| Polyolkomp. **K1** | | | | | | | |
| **A1** Setathane 1150 | | 64 | 64 | 64 | 64 | 64 | 64 |
| **A2** Desmophen T 4011 | | 4 | 4 | 4 | 4 | 4 | 4 |
| **A3** 1,5-Pentandiol | | 12 | 12 | 14 | 14 | 16 | 16 |
| **A4** Polyvest HT | | 20 | 20 | 20 | 20 | 20 | 20 |
| Katalysator | | 0.3 | 0.3 | 0.3 | 0.3 | 0.3 | 0.3 |
| Sylosiv | | 2 | 2 | 2 | 2 | 2 | 2 |
| Polyisocyanatkomp. **K2** | | | | | | | |
| Desmodur VL | | 100 | 100 | 100 | 100 | 100 | 100 |
| Mixing ratio | | 71.4 | 65.6 | 75.7 | 69.7 | 79.9 | 73.6 |
| NCO/OH-ratio | | 1.2 | 1.1 | 1.2 | 1.1 | 1.2 | 1.1 |
| (A1+A2)/(A3+A4) | | 2.1 | 2.1 | 2.0 | 2.0 | 1.9 | 1.9 |
| (A4 / A3) | | 1.7 | 1.7 | 1.4 | 1.4 | 1.3 | 1.3 |
| Gelation Time [min] | | 10 | 4 | 10 | 6 | 10 | 10 |
| **3h at 80°**C | | | | | | | |
| TS [MPa] | | 26.1 | 29.5 | 24.7 | 23 | 23.3 | 22.4 |
| EB [%] | | 23.4 | 44.7 | 24.1 | 58.4 | 10.4 | 26.6 |
| Em0.05-0.25%[MPa] | | 1080 | 802 | 746 | 1240 | 1160 | 778 |
| Em 0.5-5%[MPa] | | 525 | 556 | 468 | 428 | 429 | 423 |
| 1.Tg (°C) | | -66 | -66 | -65 | -66 | -65 | -71 |
| 2.Tg (°C) | | 85 | 93 | 94 | 84 | 94 | 86 |
| **7d RT** | | | | | | | |
| TS [MPa] | | 29.3 | | 24.8 | | 23.4 | |
| EB [%] | | 13.3 | | 14.8 | | 11 | |
| Em0.05-0.25%[MPa] | | 990 | | 624 | | 916 | |
| Em 0.5-5%[MPa] | | 588 | | 495 | | 450 | |

In den Tabellen 1 bis 7 sind die Komponenten der Polyolkomp. **K1,** respektive der Polyisocyanatkomp. **K2,** in Gewichtsteilen angegeben. Die Angaben **((A1+A2)** /**(A3+A4))** und **(A4** / **A3)** in den Tabellen 1 bis 7 beziehen sich auf die Gewichtsverhältnisse der vorhandenen Anteile an **A1** Setathane 1150, **A2** Desmophen T 4011, **A3** aliphatischem Diol, respektive **A4** Polyvest HT.

Die Bezeichnung "NCO/OH-ratio" weist das Verhältnis aller NCO-Gruppen der aromatischen Polyisocyanate B1 zu allen OH-Gruppen der Summe von **(A1+A2+A3+A4)** aus.

Die Bezeichnung "Mixing ratio" weist den Anteil der Komponente **K2** in Gewichtsteilen aus, welcher zu 100 Gewichtsteilen der entsprechenden Komponente **K1** zugegeben wurde.

"Gelation Time [min]" als Mass für die Offenzeit wurde die Zeit bis zur Klebefreiheit **("tack-free time")** bestimmt. Dazu wurden einige Gramm des Klebstoffs in einer Schichtdicke von ca. 2 mm auf Pappkarton aufgetragen und im Normklima die Zeitdauer bestimmt, bis beim leichten Antippen der Oberfläche des Klebstoffs mittels einer Pipette aus LDPE erstmals keine Rückstände auf der Pipette mehr zurückblieben.

Die **Anfangsviskosität** wurde mit einem Kegel-Platte Rheometer (gemessen mit Brookfield RTV, Drehzahl 10 U/min, Kegel/Platte, CP 50/1 bei 23°C) 30 Sekunden nach Abschluss der Mischzeit gemessen. Die Anfangsviskosität wurde von den gemischten Zusammensetzungen R1, E2 und E16 gemessen und betrug für R1 = 1730 mPas, für E2 1660 mPas und für E16 1330 mPas.

Bei **E1** bis **E53** handelt es sich um erfindungsgemässe Beispiele. Bei **R1** bis **R4** handelt es sich um Vergleichsbeispiele.

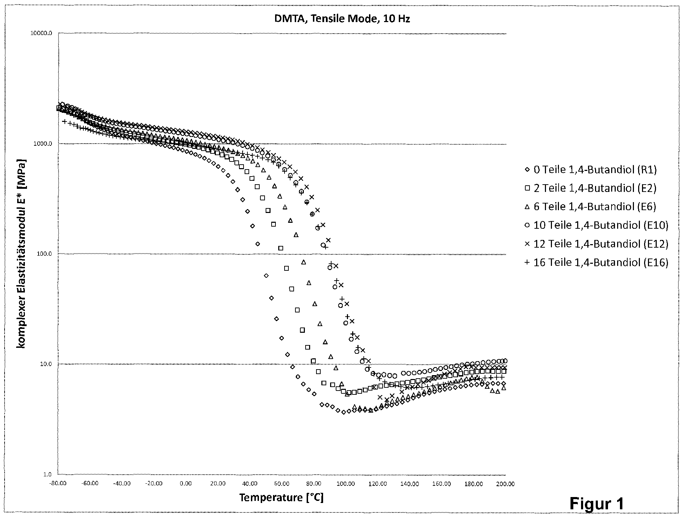

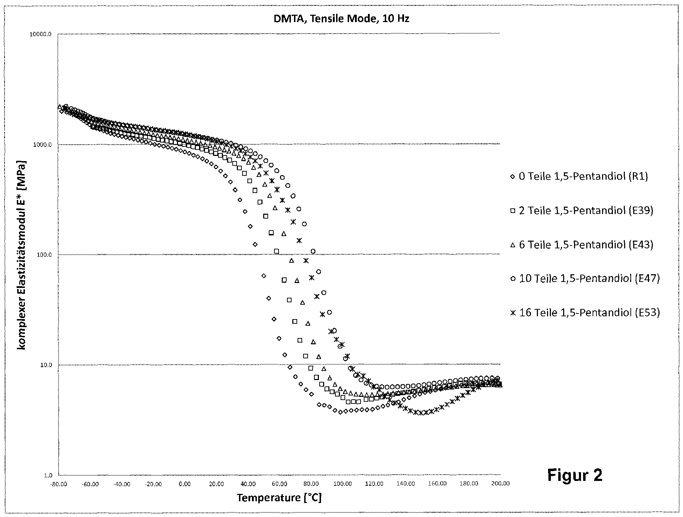

Der Verlauf des E-Moduls (komplexer Elastizitätsmodul E* [MPa] in Abhängigkeit von der Temperatur [°C]) für die Zusammensetzungen R1 (◊), E2 (■), E6 (▲), E10 (○), E12 (x) und E16 (+) ist in Figur 1 wiedergegeben. Der Verlauf des E-Moduls (komplexer Elastizitätsmodul E* [MPa] in Abhängigkeit von der Temperatur [°C] für die Zusammensetzungen R1 (◊), E39 (■), E43 (▲), E47 (○) und E53 (x) ist in Figur 2 wiedergegeben.

Daraus ergibt sich, dass die erfindungsgemässen Zusammensetzungen, insbesondere im Temperaturbereich zwischen -60°C und 120°C, mit zunehmendem Anteil von 1,4-Butandiol, respektive 1,5-Pentandiol, ein höheres komplexes Elastizitätsmodul E* aufweisen. Weiter wird der zweite Tg (Tg2) um bis zu 30 Kelvin erhöht. Überraschenderweise werden vorgenannte Effekte ab einem gewissen Gewichtsanteil an **A3** wieder abgeschwächt wie dies in den Beispielen E16, respektive E53, ersichtlich ist.

### Herstellung von Verbundwerkstoffbauteilen (Glasfaserverstärkte (GFR) Kunststofflaminate)

Es wurden GFR Laminate mit den Zusammensetzungen E16 und R5 in einem vakuumunterstützten Harzinjektion Verfahren (vacuum assisted resin injection, VARI) hergestellt.

Die Glasfasergewebe (Tissa Glasweberei AG, Oberkulm, CH, 445 g/m2) bestehen aus 0.2-0.25 mm dicken und 2.3 - 2.5 mm breiten Faserbündeln aus Endlosfasern, wobei die Faserbündel unidirektional angeordnet werden und somit das Glasfasergewebe bilden. 6 erwähnte unidirektionale Glasfasergewebe wurden derart übereinandergelegt, dass die Faserbündel in gleicher Richtung angeordnet waren. Mittels VARI-Verfahren wurden nach 2 mm dicke GFR Laminate erhalten.

Bei der Zusammensetzung R5 (Vergleichsbeispiel) handelt es sich um ein Polyurethan-Compositharz System bestehend aus Biresin CRP55 Harz (Polyolkomponente umfassend verschiedene Polyole) und Biresin B21 (Härterkomponente, umfassend Isocyanate auf MDI-Basis), beide erhältlich von Sika Deutschland GmbH.

Bei der Verwendung von R5 musste die Polyolkomponente unmittelbar vor dem Mischen mit der Härterkomponente durch Anlegen von Vakuum (20 mbar für 120 min) unter Rühren entlüftet/getrocknet werden. Weiter musste das Glasfasergewebe, angeordnet in der Kammer des VARI-Verfahrens unter Vakuum von ca. 70 mbar, für 6 Stunden bei 60 °C getrocknet werden. Unmittelbar nach dem Abkühlen des getrockneten Glasfasergewebes wurde die gemischte Zusammensetzung R5 injiziert. Wurde einer/beide der vorgenannten Schritte nicht ausgeführt führte dies zur Ausbildung fein verteilter Blasen in den erhaltenen GFR Laminate. Dies ergab durch Mikroschaumbildung getrübte Laminate mit signifikant (um mehr als 20%) verringerten mechanischen Werten. Solche Blasenbildung ist üblich bei Verwendung von 2K-PU-Zusammensetzungen des Stands der Technik, welche für Injektionsverfahren verwendet werden, wenn keine Trocknung der Komponenten und/oder der Substrate erfolgt. Die in Tabelle 8 angegebenen Werte für R5 wurden daher mit einem Verfahren erhalten, bei welchem die vorgehend erwähnten Schritte (Trocknung der Polyolkomponente und des Glasfasergewebes) durchgeführt wurden und welche daher keine Mikroschaumbildung aufwiesen.

Bei der Verarbeitung der Zusammensetzung E16 zu einem Laminat wurde auf beide dieser Schritte verzichtet. Das erhaltene GFR Laminat wies keine Blasenbildung auf und war daher transparent. Die in Tabelle 8 angegebenen Werte für E16 wurden daher mit einem Verfahren erhalten, bei welchem weder die Polyolkomponente vor oder während dem Vermischen mit der Polyisocyanatkomponente entlüftet/getrocknet wurde, noch das Glasfasergewebe getrocknet wurde.

Die Zusammensetzungen wurden mit einem SpeedMixer gemischt, und unmittelbar danach in die Kammer des VARI-Verfahrens, in dem die 6 Glasfasergewebe angeordnet waren, durch Anlegen von Vakuum eingesaugt. Die Aushärtung erfolgte bei Raumtemperatur für 8 Stunden unter Vakuum, danach folgte eine Nachhärtung bei 80°C für 3 Stunden unter Vakuum. Danach wurden die erhaltenen Laminat-Platten aus der Kammer des VARI-Verfahrens entnommen und ohne Hilfsmittel auf Raumtemperatur abgekühlt. Es wurden 2 mm dicke GFR Laminate erhalten.

Aus den GFR Laminaten wurden 3-Punkt-Biegeproben (60 x 25 mm²) mit einer Präzisions-Trennsäge (DIADISC 4200, Mutronic GmbH & Co. KG, Deutschland) geschnitten und getestet (Z250 SW, Zwick GmbH & Co. KG, Deutschland) mit einer Spannweite von 32 mm bei einer Kreuzkopfgeschwindigkeit von 1 mm/min, gemäss ISO 178. Die Werte für "Bending strength", "Elongation at F max" sowie "E-Modulus" wurden nach der klassischen Balkentheorie berechnet. Die Messwerte sind in Tabelle 8 dargestellt.

**Tabelle 8,**

| Eigenschaften (25°C, 1mm/min) | E16 | R5 |
|---|---|---|
| Bending strength 0° [Mpa] | 420 (+/- 69) | 750 (+/- 32) |
| Elongation at F max 0° [%] | 1.9 (+/- 0.3) | 2.6 (+/- 0.2) |
| E-Modulus 0° [Mpa] | 24'000 (+/- 2600) | 32'000 (+/- 960) |
| Bending strength 90° [Mpa] | 470 (+/- 20) | 240 (+/- 7) |
| Elongation at F max 90° [%] | 3.7 (+/- 0.2) | 3.1 (+/- 1.0) |
| E-Modulus 90° [Mpa] | 25'000 (+/- 3500) | 9'000 (+/- 4600) |
| Blasenbildung* | keine | Blasenbildung* |

| | | |
|---|---|---|
| *Herstellung von GFR Laminaten ohne Trocknung der Polyolkomponente und/oder des Glasfasergewebe. Alle mechanischen Messwerte für R5 wurden von GFR Laminaten gemessen, welche aufgrund von Trocknung der Polyolkomponente und des Glasfasergewebes keine Blasenbildung aufwiesen. | | |

Laminate mit Zusammensetzung E16 zeigten überraschenderweise sowohl in Längsrichtung zu den Faserbündeln (0° -Richtung) wie auch in Querrichtung (90° -Richtung) fast gleiche Werte für Bending strengt und E-modul. Dies ist insbesondere in Bezug auf Beständigkeit gegen Materialermüdung vorteilhaft.

## Patentansprüche

1. Zweikomponentige Polyurethanzusammensetzung bestehend aus einer Polyolkomponente **K1** und einer Polyisocyanatkomponente **K2;**
wobei die Polyolkomponente **K1**
mindestens ein Umsetzungsprodukt von Ricinusöl mit Ketonharzen mit einer OH-Zahl von 110 bis 200 mg KOH/g **A1,** und
mindestens ein aliphatisches Triol mit einem mittleren Molekulargewicht von 170-500 g/mol und einer OH-Zahl von 400-1100 mg KOH/g, wobei es sich um Polyetherpolyole basierend auf 1,1,1-Trimethylolpropan handelt **A2,** und
mindestens ein aliphatisches Diol mit einem Molekulargewicht von 90-146 g/mol **A3,** und
mindestens ein Polybutadienpolyol mit einer mittleren OH-Funktionalität im Bereich von 2.1 bis 2.9, insbesondere 2.3 bis 2.7, und mit einem mittleren Molekulargewicht im Bereich von 2000 bis 4000 g/mol, insbesondere 2500 bis 3000 g/mol, und einer OH-Zahl von 40 - 100 **A4**
umfasst,
und wobei die Polyisocyanatkomponente **K2**
mindestens ein aromatisches Polyisocyanat **B1** umfasst,
wobei das Verhältnis der Gew.-% von **((A1+A2)** / **(A3+A4))** 0.5 - 5 beträgt;
und wobei das Verhältnis aller NCO-Gruppen der aromatischen Polyisocyanate B1 : allen OH-Gruppen der Summe von **(A1+A2+A3+A4)** = 0.95 : 1 - 1.25 : 1 beträgt;
und wobei das Verhältnis der Gew.-% von **(A4** / **A3)** 1 - 15 beträgt.

2. Zweikomponentige Polyurethanzusammensetzung gemäss Anspruch 1, **dadurch gekennzeichnet, dass** das mindestens eine aliphatische Diol **A3** ausgewählt ist aus der Liste bestehend aus 1,4 Butandiol, 2-Ethyl-1,3-hexandiol, 3-Methyl-1,5-pentandiol und 1,5-Pentandiol, vorzugsweise ausgewählt aus der Liste bestehend aus 1,4 Butandiol und 1,5-Pentandiol.

3. Zweikomponentige Polyurethanzusammensetzung gemäss einem der vorgehenden Ansprüche, **dadurch gekennzeichnet, dass** das Verhältnis der Gew.-% von ((**A1+A2**) / **(A3+A4))** 1.6 - 3.2, insbesondere 1.65-2.9, vorzugsweise 1.75 - 2.7, beträgt.

4. Zweikomponentige Polyurethanzusammensetzung gemäss einem der vorgehenden Ansprüche, **dadurch gekennzeichnet, dass** das Verhältnis der Gew.-% von **(A4 / A3)** 0.8 - 7.5, insbesondere 0.8 - 4, vorzugsweise 1.2 - 3, insbesondere bevorzugt 1.2 - 2.2, beträgt.

5. Zweikomponentige Polyurethanzusammensetzung gemäss einem der vorgehenden Ansprüche, **dadurch gekennzeichnet, dass** die Summe aller OH-Gruppen von **(A1+A2+A3+A4)** ≥95%, insbesondere ≥98%, insbesondere bevorzugt ≥99%, am meisten bevorzugt ≥99,5%, der Summe aller OH-Gruppen der zweikomponentigen Polyurethanzusammensetzung beträgt.

6. Zweikomponentige Polyurethanzusammensetzung gemäss einem der vorgehenden Ansprüche, **dadurch gekennzeichnet, dass** es sich bei dem aromatischen Polyisocyanat **B1** um Oligomere, Polymere und Derivate abgeleitet von MDI, insbesondere mit einer mittleren NCO-Funktionalität von 2.1 bis 4.0, vorzugsweise 2.3 bis 3.0, insbesondere 2.4 bis 2.6, handelt.

7. Zweikomponentige Polyurethanzusammensetzung gemäss einem der vorgehenden Ansprüche, **dadurch gekennzeichnet, dass** die Summe der NCO-Gruppen, welche nicht von **B1** herrühren, ≤5%, insbesondere ≤2%, insbesondere bevorzugt ≤1%, am meisten bevorzugt ≤0.5%, beträgt, bezogen auf die Summe aller NCO -Gruppen der zweikomponentigen Polyurethanzusammensetzung.

8. Verfahren zum Verkleben von einem ersten Substrat mit einem zweiten Substrat umfassend die Schritte
- Mischen der Polyolkomponente **(K1)** und der Polyisocyanatkomponente **(K2)** einer zweikomponentigen Polyurethanzusammensetzung gemäss einem der Ansprüche 1 bis 7,
- Applizieren der vermischten Polyurethanzusammensetzung auf mindestens eine der zu verklebenden Substratoberflächen,
- Fügen der zu verklebenden Substrate innerhalb der Offenzeit,
- Aushärten der Polyurethanzusammensetzung.

9. Verfahren zum Verfüllen von Fugen und Spalten zwischen zwei Substraten, umfassend die Schritte:
- Mischen der Polyolkomponente **(K1)** und der Polyisocyanatkomponente **(K2)** einer zweikomponentigen Polyurethanzusammensetzung gemäss einem der Ansprüche 1 bis 7,
- Applizieren der vermischten Polyurethanzusammensetzung in die Fuge oder den Spalt,
- Aushärten der Polyurethanzusammensetzung.

10. Verfahren zum Verfüllen von Fugen und Spalten in einem Substrat umfassend die Schritte
a) Mischen der Polyolkomponente **(K1)** und der Polyisocyanatkomponente **(K2)** einer zweikomponentigen Polyurethanzusammensetzung gemäss einem der Ansprüche 1 bis 7,
b) Applizieren der vermischten Polyurethanzusammensetzung in die zu verfüllende Fuge oder den zu verfüllenden Spalt des Substrates,
c) Aushärten der Polyurethanzusammensetzung in der Fuge oder im Spalt.

11. Verfahren zum Herstellen von faserverstärkten Verbundwerkstoffteilen und einer zweikomponentigen Polyurethanzusammensetzung gemäss einem der Ansprüche1 bis 7, **dadurch gekennzeichnet, dass** die Polyolkomponente **K1** und die Polyisocyanatkomponente **K2** gemischt werden und danach, insbesondere weniger als 5 min nach dem Vermischen, vorzugsweise unmittelbar nach dem Vermischen, unter Vakuum und/oder Druck in eine die Fasern enthaltende Form eingebracht wird.

12. Verfahren gemäss Anspruch 11, **dadurch gekennzeichnet, dass** an die Polyolkomponente **K1** weniger als 1 Tag, vorzugsweise weniger als 5 h, vor dem Vermischen kein Vakuum angelegt wird, insbesondere von weniger als 200 mbar, insbesondere weniger als 100 mbar, insbesondere weniger als 50 mbar, bevorzugt 20 - 5 mbar, für mehr als 10 min, insbesondere mehr als 30 min, vorzugsweise von 30 - 120 min.

13. Verfahren gemäss Anspruch 11 oder 12, **dadurch gekennzeichnet, dass** die Fasern ausgewählt sind aus der Gruppe bestehend aus Naturfasern, Glasfasern, Kohlefasern, Kunststofffasern, Keramikfasern und Metallfasern, insbesondere Glasfasern und Kohlefasern, besonders bevorzugt Glasfasern.

14. Verfahren gemäss Anspruch 11, 12 oder 13, **dadurch gekennzeichnet, dass** die Fasern weniger als 24 h, vorzugsweise weniger als 12 h, insbesondere weniger als 6 h, vor dem Einbringen der Mischung der Polyolkomponente **K1** und der Polyisocyanatkomponente **K2** in die die Fasern enthaltende Form, nicht getrocknet werden, insbesondere nicht getrocknet werden durch Anlegen von Vakuum, insbesondere von weniger als 100 mbar, insbesondere weniger als 50 mbar, bevorzugt 20 - 1 mbar für mehr als 60 min, insbesondere mehr als 120 min, vorzugsweise von 1 - 12 h, insbesondere bevorzugt 2 - 8 h, und/oder Erwärmen für mehr als 60 min, vorzugsweise mehr als 120 min, insbesondere bevorzugt für 1 - 12 h, insbesondere bevorzugt 2 - 8 h, auf eine Temperatur über 50°C, insbesondere über 55°C, besonders bevorzugt auf eine Temperatur von 60 - 80°C

15. Faserverbundwerkstoff bestehend aus Fasern und einer ausgehärteten zweikomponentigen Polyurethanzusammensetzung gemäss einem der Ansprüche 1 bis 7, vorzugsweise sind die Fasern in der zweikomponentigen Polyurethanzusammensetzung eingebettet.

16. Verwendung einer zweikomponentigen Polyurethanzusammensetzung gemäss einem der Ansprüche 1 bis 7 als Infusionsharz, insbesondere zur Herstellung von faserverstärkten Verbundwerkstoffteilen, besonders bevorzugt in Infusionsverfahren.
